Europäisches Patentamt

European Patent Office

Office européen des brevets

(19)

(11) Veröffentlichungsnummer: **0 304 597 B1**

# (12) EUROPÄISCHE PATENTSCHRIFT

(45) Veröffentlichungstag der Patentschrift: **30.10.91**

(51) Int. Cl.⁵: **B01D 25/12**, B01D 29/09,
B01D 33/04

(21) Anmeldenummer: **88111171.0**

(22) Anmeldetag: **13.07.88**

(54) **Verfahren zur selbsttätigen Bahnlaufregelung eines Filterbandes und Anwendung des Verfahrens bei einem Plattenfilter.**

(30) Priorität: **05.08.87 CH 3005/87**

(43) Veröffentlichungstag der Anmeldung:
**01.03.89 Patentblatt 89/09**

(45) Bekanntmachung des Hinweises auf die
Patenterteilung:
**30.10.91 Patentblatt 91/44**

(84) Benannte Vertragsstaaten:
**AT BE CH DE ES FR GB GR IT LI LU NL SE**

(56) Entgegenhaltungen:
**GB-A- 2 020 565**
**GB-A- 2 143 793**
**US-A- 4 274 961**

(73) Patentinhaber: **TENAG AG**
**Rohrstrasse 44**
**CH-8152 Glattbrugg(CH)**

(72) Erfinder: **Hudson, John H.**
**25 Boulevard Albert Ier**
**Monaco(MC)**

(74) Vertreter: **Riederer, Conrad A., Dr.**
**Bahnhofstrasse 10**
**CH-7310 Bad Ragaz(CH)**

**Beschreibung**

Die Erfindung betrifft ein Verfahren zur selbsttätigen Regelung des Laufs eines Filterbandes zwischen zwei benachbarten Filter platten eines eine Umlenkvorrichtung aufweisenden Plattenfilters. Die US-A-3 608 734 und die EP-A-0 032 829 beschreiben Plattenfilter mit einem Plattenstapel, der eine Anzahl von voneinander separierbaren Platten aufweist. Zwischen je zwei Platten befindet sich ein Filterband, durch welches eine Einlasskammer auf der Unterseite der oberen Platte von einer Auslasskammer auf der Oberseite der darunter liegenden Platte abgegrenzt wird. Die zu reinigende Flüssigkeit wird also der Einlasskammer zugeführt, von wo dann Flüssigkeit durch einen Abschnitt des Filterbandes hindurch in die Auslasskammer fliesst. Sämtliche Einlasskammern sind mit einem gemeinsamen Einlass und sämtliche Auslasskammern mit einem gemeinsamen Auslass verbunden. Für jedes Filterband ist eine Filterband-Transportvorrichtung vorgesehen, um periodisch einen gebrauchten Filterbandabschnitt durch einen frischen Filterbandabschnitt zu ersetzen. Um dies zu ermöglichen, werden die Platten des Plattenstapels voneinander separiert. Dazu ist eine Vorrichtung vorgesehen, welche zusätzlich auch die Aufgabe besitzt, die Platten nach dem Transport des Filterbandes zusammenzupressen, damit sie einen neuen Filterbandabschnitt zwischen den Rändern der Einlasskammer und einer Auslasskammer festklemmen. Durch das Festklemmen des Filterbandes wird bereits eine gewisse Dichtung bewirkt. Eine umlaufende Nut in der Nähe des Plattenrandes fängt etwaige Leckflüssigkeit auf, die dann durch eine Pumpe abgesogen wird. Diese Plattenfilter sind zum Einsatz mit einem zusätzlichen Hilfsmittel, z.B. Kieselgur, vorgesehen. Die Verwendung von Kieselgur hat zur Folge, dass sich jeweils in der Einlasskammer auf dem in der Regel waagrecht angeordneten Filterband ein Filterkuchen bildet. Um diesen Filterkuchen periodisch zusammen mit dem Filterbandabschnitt aus dem Plattenfilter hinauszutransportieren, werden die Filterplatten zuerst voneinander separiert, worauf dann die Filterband-Transportvorrichtung betätigt wird.

Beim Plattenfilter gemäss der US-A-3 608 734 weist die Filterband-Transportvorrichtung einen Mechanismus mit spitzen Stiften auf, die in das Filterband band eindringen, um es zu transportieren. Dadurch wird das Filterband beschädigt, so dass es nur einmal verwendbar ist. Demgegenüber besitzt der Plattenfilter gemäss der EP-A-0 032 829 eine Filterband-Transportvorrichtung mit einer Transportrolle und einer Klemmrolle. Die Klemmrolle ist mit einer Anzahl von Scheiben ausgerüstet, die in den Filterkuchen eindringen können, um das Filterband gegen die Transportrolle zu drücken und so zu gewährleisten, dass das Filterband von der Transportrolle auch sicher mitgenommen wird. In beiden Fällen werden die gebrauchten Filterbänder samt dem Filterkuchen einem Aufnahmebehälter zugeführt.

Bei Bandtransportsystemen kann ein Schräglauf des transportierten Bandes auftreten. Auch die bekannten Plattenfilter sind dieser Gefahr unterworfen. Läuft aber ein Filterband stark schräg, so kann es vorkommen, dass beim Zusammenpressen der Filterplatten das Filterband nicht überall am Rand erfasst wird, so dass Flüssigkeit nach aussen auf den Boden läuft. Um dies zu vermeiden, muss entweder der Plattenfilter ständig überwacht und ein etwaiger Schräglauf vor dem Schliessen der Filterplatten manuell korrigiert werden oder es müssen aufwendige Überwachungs- und Regeleinrichtungen für das Filterband vorgesehen werden.

Ein weiterer Nachteil der bekannten Plattenfilter besteht darin, dass der Filterkuchen und das Filterband nicht voneinander getrennt werden. Dadurch wird sowohl die Wiederverwertung als auch die Reinigung des Filterbandes und des Kieselgurs verunmöglicht oder zumindest erschwert.

Es ist daher Aufgabe der vorliegenden Erfindung, ein Verfahren zu schaffen, welches die geschilderten Nachteile mindestens teilweise vermeidet. Insbesondere soll ein Schräglauf des Bandes, z.B. des Filterbandes, und eine Leckage von Flüssigkeit vermieden werden.

Zur Lösung dieser Aufgabe sieht die Erfindung ein Verfahren gemäss Anspruch 1 vor. Wie nachher noch unter Bezugnahme auf die Zeichnung näher erläutert wird, hat dieses Verfahren den Vorteil, dass die bei einem Schräglauf des Bandes auftretenden Kräfte bestrebt sind, das Band wieder in die richtige Lage zu bringen.

Zweckmässigerweise beträgt der Bandebenenwinkel null Grad. Dies bedeutet mit anderen Worten, dass die Ebene des Bandes vor der Umlenkung und die Ebene des Bandes nach der Umlenkung parallel zueinander verlaufen. Dies hat den Vorteil, dass es dabei zu einer vollständigen Wendung der Bandflächen kommt. So wird die obere Fläche eines horizontalen Bandes zur unteren Fläche. Dies hat verschiedene Vorteile bei Plattenfiltern. So ist es möglich, das aus dem ersten Plattenstapel kommende Filterband zu reinigen und mit der unbenutzten Fläche nach oben gerichtet in einen zweiten Plattenstapel einzuführen, wo es nochmals zur Filtrierung brauchbar ist.

Vorteilhaft beträgt der Umlenkwinkel 90°. Dies ermöglicht eine zweckmässige Maschinenkonstruktion, bei der verschiedene Einheiten in einem Winkel von 90° zueinander angeordnet werden könnten. Die Erfindung betrifft auch einen Plattenfilter mit einem Plattenstapel, welcher eine Anzahl von voneinander separierbaren Platten aufweist, je einem zwischen zwei benachbarten Platten beweglichen Filterband, je einer Filterband-Transportvorrichtung für das jeweilige Filterband, um periodisch einen gebrauchten Filterbandabschnitt durch einen frischen Filterbandabschnitt zu ersetzen, einer Umlenkvorrichtung für das gebrauchte Filterband und einer Vorrichtung, um die Platten des Plattenstapels während des Filtrierens zusanmenzupressen und vor dem Transport des Filterbandes auseinanderzuziehen. Der Plattenfilter ist dadurch gekennzeichnet, dass für jedes Filterband eine stationäre Umlenkkante vorgesehen ist, die so angeordnet ist, dass der Umlenkwinkel zwischen der Richtung des Filterbandes vor der Umlenkung und der Richtung des Filterbandes nach der Umlenkung grösser ist als der Winkel zwischen der Ebene des Filterbandes vor der Umlenkung und der Ebene des Filterbandes nach der Umlenkung. Dies hat den Vorteil, dass der Lauf des Filterbandes selbsttätig reguliert wird. Es besteht somit keine Gefahr, dass beim Zusammenpressen der Platten das Filterband nicht überall von den Dichtungsmitteln erfasst wird und dass dann Flüssigkeit nach aussen auf den Boden fliesst. Es sind auch keine teueren Ueberwachungs- und Regelvorrichtungen zum Kontrollieren der verschiedenen Filterbänder notwendig.

Zweckmässigerweise beträgt der Umlenkwinkel etwa 90°. Dies erleichtert die Konstruktion des Plattenfilters, weil dann die Transportvorrichtungen rechtwinklig zum Plattenstapel angeordnet werden können und die Anlage relativ kompakt ausgestaltet werden kann.

Vorteilhaft beträgt der Bandebenenwinkel null Grad. In diesem Fall ist also die Ebene des Bandes vor der Umlenkung Parallel mit der Ebene des Bandes nach der Umlenkung. Dies hat den konstruktiven Vorteil, dass auch nach der Umlenkung die verschiedenen Filterbänder parallel geführt werden können und eine grosse Zahl von Filterbändern zur Anwendung gelangen kann, ohne dass Platzprobleme entstehen. Die Umlenkung kann sowohl auf die eine oder andere Seite der ursprünglichen Transportrichtung des Filterbandes erfolgen. Dies heisst also, dass, wenn ein Plattenfilter mit horizontalen Platten von oben betrachtet wird, eine Umlenkung nach links oder nach rechts möglich ist. Es wäre sogar möglich, die Umlenkkanten derart anzuordnen, dass abwechslungsweise ein Filterband nach rechts und ein anderes Filterband nach links abgelenkt wird.

Vorteilhaft sind die Umlenkkanten der einzelnen Filterbänder senkrecht übereinander angeordnet. Dies gibt eine einfache Konstruktion und hat zudem den Vorteil, dass der Filterkuchen sich bei allen Bändern an der gleichen Stelle ablöst und keine besonderen Vorrichtungen notwendig sind, um den Filterkuchen in ein Auffanggefäss zu leiten.

Um das Aufbrechen des Filterkuchens und die Ablösung vom Filterband wesentlich zu erleichtern, weist die Umlenkkante vorteilhaft einen relativ kleinen Radius, z.B. 4 bis 10 mm, auf.

Es ist möglich, nach der genannten Umlenkkante eines Filterbandes eine zweite Umlenkkante vorzusehen. Durch eine parallel und in einem Abstand zur ersten Umlenkkante angeordnete zweite Umlenkkante kann das Band wieder in die ursprüngliche Lage und in die gleiche Bewegungsrichtung wie nach dem Abwickeln von der Abwickelrolle gebracht werden. Durch Anordnung der zweiten Umlenkkante in einem Winkel von 90° zur ersten Umlenkkante ist es jedoch möglich, dem Band eine Bewegungsrichtung zu geben, welche zur ursprünglichen Bewegungsrichtung entgegengesetzt ist.

Vorteilhaft weist die Filterband-Transportvorrichtung je eine Transportrolle und eine Andruckrolle auf. Da durch die Umlenkkante und gegebenenfalls durch eine zusätzliche Reinigungsvorrichtung eine gute Ablösung des Filterkuchens erfolgt, ermöglicht eine so ausgestaltete Filterband-Transportvorrichtung eine problemlose Mitnahme des Filterbandes.

Die Transportrolle ist vorteilhaft, z.B. mit Gummi oder Kunststoff beschichtet, um die Reibung zu erhöhen. Die Transportrolle kann mittels einer Kette, z.B. einer Rollenkette, antreibbar sein. Die Flexibilität der Ketten ermöglicht es, die Filterband-Transportvorrichtungen synchron mit dem Öffnen und Schliessen der Platten des Plattenstapels auseinander bzw. zueinander zu bewegen. Im geöffneten Zustand der Platten sind dann die Ketten gestreckt und können zum Antrieb der Transportrollen und so zum Fördern des Filterbandes von einem Motor angetrieben werden. Die vorher beschriebene Auseinander- bzw. Zueinanderbewegung der Filterband-Transportvorrichtungen hat den Vorteil, dass in den Filterbändern keine lose Schlaufen zwischen Plattenstapel und Transportvorrichtungen entstehen, die zu einem Schräglauf führen könnten und den Filterbandverbrauch erhöhen würden.

Wenn mehrere Umlenkkanten vorgesehen sind, wird vorteilhaft die jeweilige Filterband-Transportvorrichtung nach der letzten Umlenkkante angeordnet. Es ist dann auch möglich, mit einer einzigen Filterband-Transportvorrichtung pro Filterband auszukommen.

Es ist möglich, mehrere Gruppen von Aufwickelrollen vorzusehen, wobei jede Gruppe eine Anzahl von Filterbändern nach ihrem Gebrauch übernimmt, aber jedes Filterband individuell von einer Aufwickelrolle aufgewickelt wird. Dies hat den erheblichen Vorteil, dass der Durchmesser der Aufwickelrollen gleich gross gehalten werden kann, wie jener der Abwickelrollen. Dies wäre nicht der Fall, wenn die Aufwickelrollen senkrecht untereinander angeordnet werden müssten. Vorteilhaft sind mehrere Gruppen von nebeneinander angeordneten Aufwickelrollen übereinander angeordnet. Dies ermöglicht eine gute Ausnützung des vorhandenen Platzes. Es ist aber auch möglich, eine Aufwickelrolle vorzusehen, welche mehr als ein Filterband oder alle Filterbänder nach ihrem Gebrauch zusammen aufnimmt.

Zweckmässigerweise ist bei der jeweiligen Umlenkkante eine Reinigungsvorrichtung, z.B. eine rotierende Bürste, zur Reinigung des Filterbandes vorgesehen. Dies ist von besonderem Vorteil, wenn eine weitere Benützung des Filterbandes nach der Reinigung vorgesehen ist. So sieht denn ein Ausführungsbeispiel auch vor, zwei Plattenstapel hintereinander unter Zwischenschaltung einer Umlenkkante anzuordnen, wobei jedes Filterband vor dem Aufrollen auf die Aufwickelrolle zweimal gebraucht wird.

Die Erfindung wird nun unter Bezugnahme auf die Zeichnung beschrieben. Es zeigt:

| Figur 1 | die Umlenkung eines Bandes um eine gedachte Umlenkkante in Form einer Linie, wobei der Umlenkwinkel alpha zwischen den beiden Bewegungsrichtungen ersichtlich ist, |
| Figur 2 | eine Seitenansicht des Bandes von Figur 1, wobei der Winkel beta zwischen der Ebene des Bandes vor der Umlenkung und der Ebene des Bandes nach der Umlenkung ersichtlich ist, ist, |
| Figur 3 | eine Seitenansicht wie in Figur 2, jedoch mit einer in der Praxis möglichen Umlenkkante in Form eines Stabes oder dergleichen mit einer gerundeten Kante, |
| Figur 4 | eine Seitenansicht wie in Figur 3, jedoch mit einer in der Praxis zweckmässigen parallelen Anordnung der Ebene des Bandes vor der Umlenkung und der Ebene des Bandes nach der Umlenkung (Bandebenenwinkel = null), |
| Figur 5 | eine schematische perspektivische Darstellung eines Plattenfilters, gemäss einem Ausführungsbeispiel der Erfindung, |
| Figur 6 | eine Seitenansicht des Plattenfilters von Figur 5, |
| Figur 7 | eine Ansicht des Plattenfilters von Figur 5 oder 6 von oben, |
| Figur 8 | einen Schnitt entlang der Linie VIII-VIII von Figur 7, |
| Figur 9 | ein Ausführungsbeispiel einer gemeinsamen Aufwickelspule, |

| Figur 10 | eine Ansicht wie in Figur 7, wobei jedoch die Ablenkung der Filterbänder nach rechts erfolgt, |
| Figur 11 | eine Ansicht wie in Figur 7, wobei jedoch eine doppelte Ablenkung der Filterbänder erfolgt, |
| Figur 12 | eine schematische Darstellung von Aufwickelrollen zum separaten Aufwickeln von Lagen eines zweilagigen Filterbandes. |

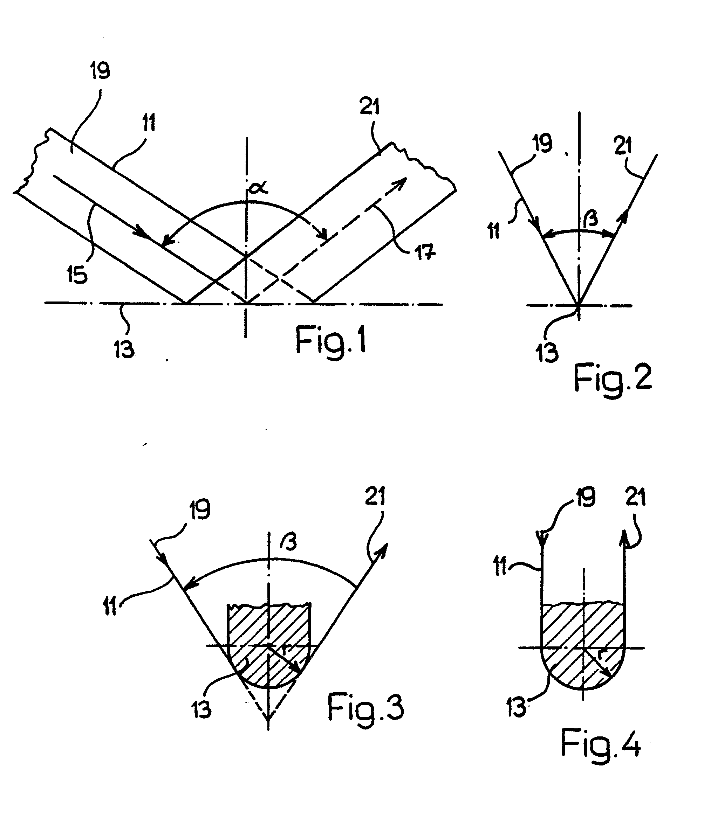

Wie die Figuren 1 und 2 zeigen, wird das Band 11 um eine gedachte Umlenkkante 13 geführt. Zwischen der Richtung 15 des Bandes vor der Umlenkung und der Richtung 17 des Bandes nach der Umlenkung besteht ein Umlenkwinkel alpha. Dieser Umlenkwinkel alpha ist grösser als der Winkel beta (Fig. 2) zwischen der Ebene 19 des Bandes vor der Umlenkung und der Ebene 21 nach der Umlenkung. Die Umlenkkante 13 ist daher nicht rechtwinklig zu den Bewegungsrichtungen 15 und 17. Wären Winkel alpha und beta gleich gross, so wäre die Umlenkkante 13 senkrecht zu den Bewegungsrichtungen 15, 17 angeordnet. Dies wird hier aber bewusst vermieden.

Stellt man sich vor, dass in Figur 1 die Umlenkkante 13 fest angeordnet ist und das Band auf dieser Umlenkkante 13 z.B. nach rechts verschoben wird, so leuchtet ein, dass das Band dann links nicht mehr an der Umlenkkante 13 aufliegt. Dass es überhaupt soweit kommen kann, wird durch den Zug am Band 11 verhindert. Die dadurch verursachten Kräfte sind bestrebt, das Band 11 in die Lage zurückzubringen, in welcher es normalerweise über den ganzen Umlenkbereich mit der Umlenkkante 13 in Berührung steht. Dadurch findet eine selbsttätige Bahnlaufregelung statt.

In der Praxis wird die Umlenkkante 13 nicht durch eine Linie gebildet, sondern durch eine Fläche, die zweckmässigerweise die gerundete Kante eines Stabes oder dergleichen ist, wie dies in Figur 3 dargestellt wird. Der Radius r beträgt etwa 4 bis 10 mm. Weiter ist es in den meisten Fällen zweckmässig, die Bandflächen 19 und 21 parallel anzuordnen wie dies in Figur 4 gezeigt wird. In diesem Fall beträgt der Winkel beta null Grad. Der Winkel alpha sollte aber eine gewisse Grösse aufweisen, damit der gewünschte Effekt einer selbsttätigen Bahnlaufregelung eintritt. Besonders praktisch ist ein Umlenkwinkel alpha von etwa 90°. Dies gibt auch konstruktiv viele Vorteile. Versuche habe gezeigt, dass bei parallelen Bandebenen 19, 21 Umlenkwinkel von 70 - 110° durchaus brauchbar sind.

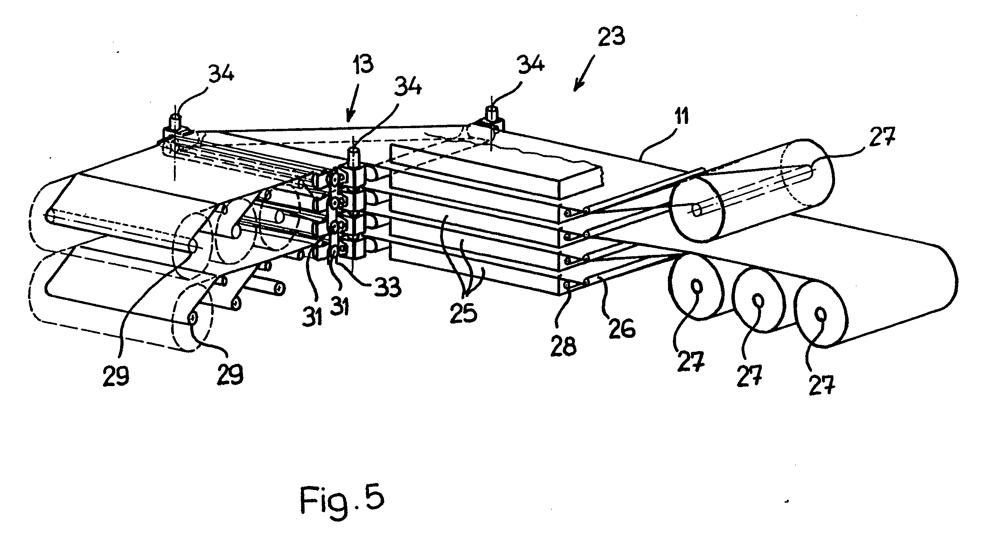

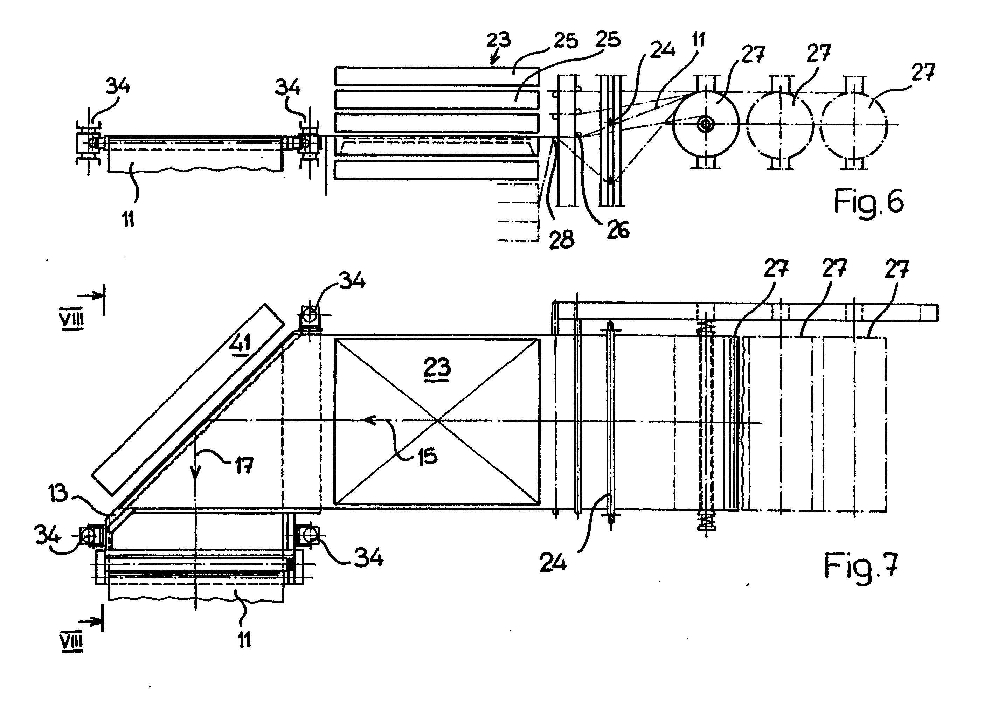

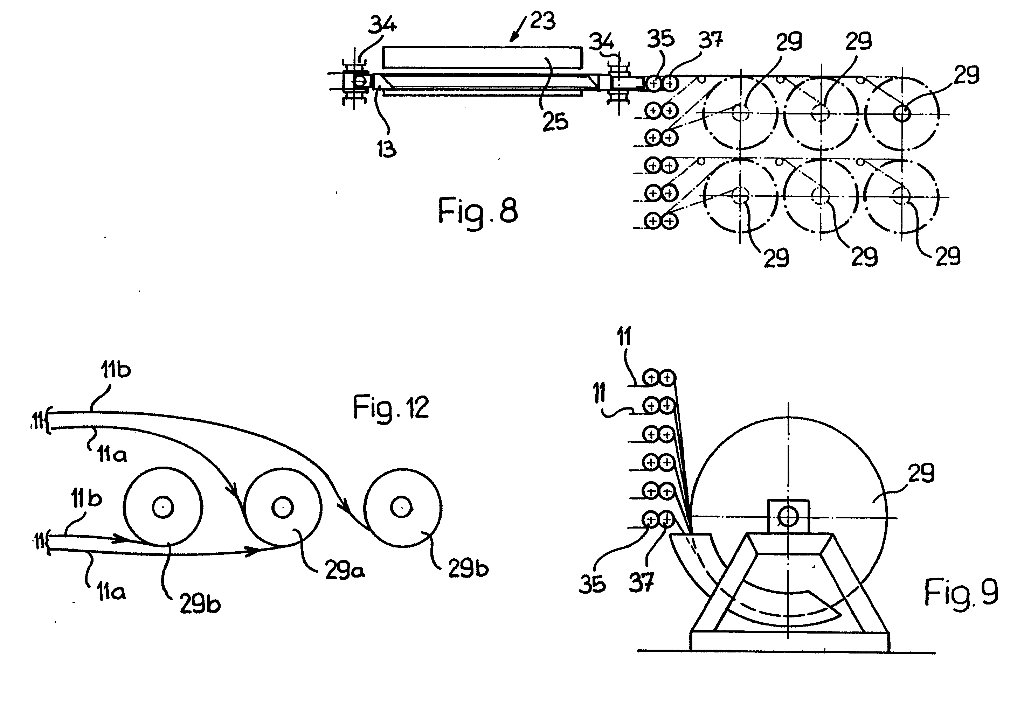

Wie die Figuren 5 und 6 zeigen, besitzt der Plattenfilter einen Plattenstapel 23 mit einer Anzahl, z.B. zwanzig, voneinander separierbaren Platten 25. Diese Platten 25 sind vorzugsweise horizontal angeordnet. In Bezug auf die detaillierte Ausgestaltung eines Plattenstapels 23 kann beispielsweise auf die eingangs erwähnte US-A-3 608 734 verwiesen werden. Von einer Abwickelrolle 27 her wird durch eine Bandspannvorrichtung 24 (Fig. 6, 7) hindurch und über die Führungsrollen 26, 28 ein Filterband 11 jeweils zwischen zwei Platten 25 hindurchgeführt. Nach dem Plattenstapel 23 wird das Filterband 11 um eine im Winkel von 45° zur Bandrichtung angeordneten Umlenkkante 13 geführt. Dadurch tritt eine Richtungsänderung von 90° und eine Umkehrung des Bandes 11 ein. Die einzelnen Filterbänder 11 werden dann durch die Aufwickelrollen 29 aufgenommen. Für jedes Filterband ist eine Filterband-Transportvorrichtung 31 vorgesehen, die beispielsweise durch Rollenketten 33 gemeinsam durch eine nicht eingezeichnete Antriebsvorrichtung antreibbar sind. Eine Hubvorrichtung 34, die nur teilweise aus der Zeichnung ersichtlich ist, ist vorgesehen, um die Filterband-Transportvorrichtungen 31 synchron mit den Platten des Plattenstapels 23 zu bewegen. Die Hubvorrichtung 34 kann ähnlich ausgestaltet sein wie die Vorrichtung, welche dazu dient, die Platten 25 des Plattenstapels 23 auseinanderzuziehen. Es kann diesbezüglich auf die US-A-3 608 734 verwiesen werden. Jede Filterband-Transportvorrichtung 31 besitzt eine Transportrolle 35, die vorteilhaft eine gummierte Oberfläche aufweist, und eine Andrückrolle 37 (Fig. 8).

Nach der Filterband-Transportvorrichtung 31 nimmt jeweils eine Aufwickelrolle 29 das Filterband 11 auf.

Die Umlenkkanten 13 sämtlicher Filterbänder 11 sind übereinander angeordnet (Fig. 7). Unter diesen Umlenkkanten 13 befindet sich ein nicht-eingezeichnetes Auffanggefäss, in welchem der Filterkuchen separat von den Filterbändern 11 aufgefangen wird. Um das Filterpapier zu reinigen, dient eine schematisch angedeutete Reinigungsvorrichtung 41, z.B. eine rotierende Bürste.

Da dank der Umlenkkanten 13 vor dem Aufrollen eine saubere Abtrennung des Filterkuchens vom Filterband 11 bewirkt wird, kann das Filterband 11 problemlos durch die Aufwickelrollen 29 aufgewickelt werden.

Die Aufwickelrollen 29 sind in mehreren horizontalen Gruppen übereinander angeordnet (Fig. 5 und 8). Werden beispielsweise je drei Aufwickelrollen 29 nebeneinander angeordnet, so kann die einzelne Aufwickelrolle mit dem aufgewickelten Band einen dreifach grösseren Durchmesser aufweisen, als dies der Fall wäre, wenn die Aufwickelrollen in einer Linie übereinander angeordnet wären. Die dargestellte Anordnung der Aufwickelrollen in Gruppen ermöglicht daher eine Dimensionierung der einzelnen Aufwickelrollen 29, die genügt, das ganze auf einer Abwickelrolle 27 enthaltene Filterband aufzunehmen.

Wie aber das Ausführungsbeispiel von Figur 9 zeigt, ist es auch möglich, für mehrere oder alle Filterbänder 11 eine gemeinsame Aufwickelrolle 29' vorzusehen.

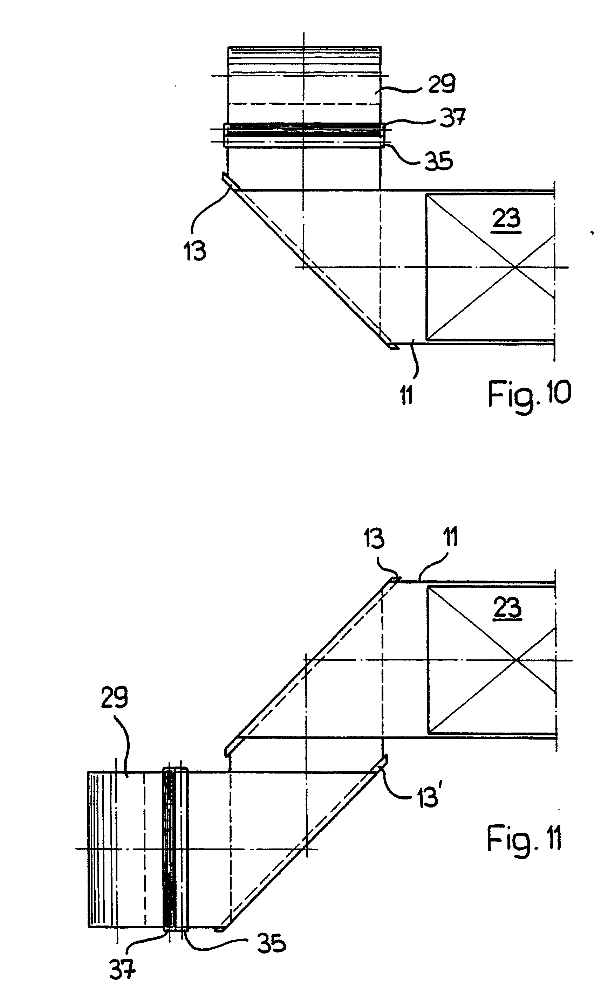

Während Fig. 7 die Umlenkung des Filterbandes 11 nach links zeigt, zeigt Fig. 10, dass das Filterband auch nach rechts umgelenkt werden kann. Fig. 11 zeigt die doppelte Umlenkung des Filterbandes 11 durch zwei Umlenkkanten 13, 13'. Zwischen diesen Umlenkkanten 13,13' könnte ein weiterer Plattenstapel angeordnet sein.

Es ist auch möglich, ein mehrlagiges, z.B. zweilagiges, Filterband (Fig. 12: 11a, 11b) zu verwenden, wobei eine Lage als Transportband 11b und eine Lage als eigentliches Filterband 11a dient. Da das Transportband 11b eine hohe Zugfestigkeit besitzt, genügt als eigentliches Filterband eine relativ billige Filterlage 11a mit geringer Zugfestigkeit. Diese Filterlage 11a kann dann zusammen mit dem Filterkuchen in den Auffangbehälter geleitet werden, währenddem das Transportband 11b zum weiteren Gebrauch auf eine Aufwickelrolle 29 (Fig. 8) oder 29b (Fig. 12) aufgewickelt wird. Es ist aber auch möglich, separate Aufwickelrollen 29a für die Filterlage 11a vorzusehen, wobei gegebenenfalls auch zwei Filterlagen 11a auf eine Rolle 29a aufgewickelt werden können, wie dies in Figur 12 dargestellt wird.

## Patentansprüche

1. Verfahren zur selbsttätigen Regelung des Laufs eines Filterbandes zwischen zwei benachbarten Filterplatten (25) eines eine Umlenkvorrichtung aufweisenden Plattenfilters, dadurch gekennzeichnet, dass das Filterband derart um eine stationäre Umlenkkante (13) der Umlenkvorrichtung gezogen wird, dass der Umlenkwinkel (alpha) zwischen der Richtung (15) des Filterbandes vor der Umlenkung und der Richtung (17) des Filterbandes nach der Umlenkung grösser ist als der Winkel (beta) zwischen der Ebene (19) des Filterbandes (11) vor der Umlenkung und der Ebene (21) des Filterbandes nach der Umlenkung.

2. Verfahren nach Anspruch 1, dadurch gekennzeichnet, dass der Bandebenenwinkel (beta) null Grad beträgt.

3. Verfahren nach Anspruch 1 oder 2, dadurch gekennzeichnet, dass der Umlenkwinkel (alpha) 90° beträgt.

4. Plattenfilter mit einem Plattenstapel (23), welcher eine Anzahl von voneinander separierbaren Platten (25) aufweist, je einem zwischen zwei benachbarten Platten (25) beweglichen Filterband (11), je einer Filterband-Transportvorrichtung (31) für das jeweilige Filterband (11), um periodisch einen gebrauchten Filterbandabschnitt durch einen frischen Filterbandabschnitt zu ersetzen, einer Umlenkvorrichtung für das gebrauchte Filterband und einer Vorrichtung um die Platten (25) des Plattenstapels (23) während des Filtrierens zusammenzupressen und vor dem Transport des Filterbandes (11) auseinanderzuziehen, dadurch gekennzeichnet, dass die Umlenkvorrichtung für jedes Filterband (11) eine stationäre Umlenkkante (13) aufweist, die so angeordnet ist, dass der Umlenkwinkel (alpha) zwischen der Richtung (15) des Filterbandes vor der Umlenkung und der Richtung (17) des Filterbandes nach der Umlenkung grösser ist als der Winkel (beta) zwischen der Ebene (14) des Filterbandes (11) vor der Umlenkung und der Ebene (21) des Filterbandes nach der Umlenkung.

5. Plattenfilter nach Anspruch 4, dadurch gekennzeichnet, dass der Umlenkwinkel (alpha) etwa 90° beträgt.

6. Plattenfilter nach Anspruch 4 oder 5, dadurch gekennzeichnet, dass der Bandebenenwinkel (beta) null beträgt.

7. Plattenfilter nach einem der Ansprüche 4 bis 6, dadurch gekennzeichnet, dass die Umlenkkanten (13) für die Filterbänder (11) senkrecht übereinander angeordnet sind.

8. Plattenfilter nach einem der Ansprüche 4 bis 7, dadurch gekennzeichnet, dass die Umlenkkanten (13) derart angeordnet sind, dass abwechslungsweise ein Filterband (11) nach rechts und ein anderes Filterband (11) nach links umgelenkt wird.

9. Plattenfilter nach einem der Ansprüche 4 bis 8, dadurch gekennzeichnet, dass die Umlenkkante (13) einen relativ kleinen Radius, z.B. 4 bis 10 mm, aufweist.

10. Plattenfilter nach einem der Ansprüche 4 bis 9, dadurch gekennzeichnet, dass nach der genannten Umlenkkante (13) eines Filterbandes (11) eine zweite Umlenkkante (13') vorgesehen ist.

11. Plattenfilter nach einem der Ansprüche 4 bis 10, dadurch gekennzeichnet, dass die Filterband-Transportvorrichtung (31) je eine Transportrolle (35) und eine Andruckrolle (37) aufweist.

12. Plattenfilter nach Anspruch 11, dadurch gekennzeichnet, dass die Transportrollen (35) z.B. mit Kunststoff oder Gummi beschichtet sind.

13. Plattenfilter nach Anspruch 11 oder 12, dadurch gekennzeichnet, dass die Transportrollen (35) je mittels einer Kette (33), z.B. einer Rollenkette, antreibbar sind.

14. Plattenfilter nach einem der Ansprüche 4 bis 13, dadurch gekennzeichnet, dass eine Hubvorrichtung vorgesehen ist, um die Filterband-Transportvorrichtung (31) synchron mit den Platten (25) des Plattenstapels (23) zu bewegen.

15. Plattenfilter nach einem der Ansprüche 4 bis 14, dadurch gekennzeichnet, dass die jeweilige Filterband-Transportvorrichtung nach der letzten Umlenkkante (13, 13') angeordnet ist.

16. Plattenfilter nach einem der Ansprüche 4 bis 15, dadurch gekennzeichnet, dass mehrere Gruppen von Aufwickelrollen (29) vorgesehen sind, wobei jede Gruppe eine Anzahl von Filterbändern (11) nach ihrem Gebrauch übernimmt, aber jedes Filterband (11) individuell von einer Aufwickelrolle (29) aufgewickelt wird.

17. Plattenfilter nach Anspruch 16, dadurch gekennzeichnet, dass mehrere Gruppen von nebeneinander angeordneten Aufwickelrollen (29) übereinander angeordnet sind.

18. Plattenfilter nach einem der Ansprüche 4 bis 14, dadurch gekennzeichnet, dass eine gemeinsame Aufwickelrolle (29') vorgesehen ist, welche sämtliche Filterbänder (11) nach ihrem Gebrauch aufnimmt.

19. Plattenfilter nach einem der Ansprüche 4 bis 18, dadurch gekennzeichnet, dass bei oder nach der jeweiligen Umlenkkante (13, 13') eine Reinigungsvorrichtung (41) z.B. eine rotierende Bürste, zur Reinigung des Filterbandes (11) vorgesehen ist.

20. Plattenfilter nach einem der Ansprüche 10 bis 19, dadurch gekennzeichnet, dass mehrere Plattenstapel unter Zwischenschaltung mindestens einer Umlenkkante (13) hintereinander angeordnet sind.

21. Plattenfilter nach einem der Ansprüche 16 bis 20, wobei mindestens eines der Filterbänder (11) mehrlagig ist, z.B. zwei Lagen (11a, 11b) aufweist, dadurch gekennzeichnet, dass Aufwickelrollen (29) für verschiedene Lagen vorgesehen sind.

22. Plattenfilter nach Anspruch 21, wobei mehrere Filterbänder (11) mehrlagig sind, dadurch gekennzeichnet, dass Aufnahmerollen (29a) zur Aufnahme von je zwei Lagen von verschiedenen Filterbändern (11) vorgesehen sind.

**Claims**

1. Method for automatically controlling the travel of a filter band between two adjacent filter plates (25) of a plate filter comprising a deflection device, characterised in that the filter band is drawn around a stationary deflection edge (13) of the deflection device such that the deflection angle (alpha) between the direction (15) of the filter band before deflection and the direction (17) of the filter band after deflection is greater than the angle (beta) between the plane (19) of the filter band (11) before deflection and the plane (21) of the filter band after deflection.

2. Method according to claim 1, characterised in that the band plane angle (beta) is zero degrees.

3. Method according to claim 1 or 2, characterised in that the deflection angle (alpha) is 90°.

4. Plate filter with a plate stack (23) comprising a number of plates (25), which can be separated from one another, a respective filter band (11), which can move between two adjacent plates (25), a respective filter band transport device (31) for each filter band (11), in order to periodically replace a used filter band length by a new filter band length, a deflection device for the used filter band and a device to compress the plates (25) of the plate stack (23) during filtration and pull them apart before conveying the filter band (11), characterised in that the deflection device comprises a stationary deflection edge (13) for each filter band (11), which edge is arranged such that the deflection angle (alpha) between the direction (15) of the filter band before deflection and the direction (17) of the filter band after deflection is greater than the angle (beta) between the plane (19) of the filter band (11) before deflection and the plane (21) of the filter band after deflection.

5. Plate filter according to claim 4, characterised in that the deflection angle (alpha) is approximately 90°.

6. Plate filter according to claim 4 or 5, characterised in that the band plane angle (beta) is zero.

7. Plate filter according to one of claims 4 to 6, characterised in that the deflection edges (13) for the filter bands (11) are arranged vertically above one another.

8. Plate filter according to one of claims 4 to 7, characterised in that the deflection edges (13) are arranged such that one filter band (11) is deflected to the right and another filter band (11) to the left in turn.

9. Plate filter according to one of claims 4 to 8, characterised in that the deflection edge (13) has a relatively small radius, e.g. between 4 and 10 mm.

10. Plate filter according to one of claims 4 to 9, characterised in that a second deflection edge (13') is provided after the above-mentioned deflection edge (13) for a filter band (11).

11. Plate filter according to one of claims 4 to 10, characterised in that the filter band transport device (31) in each case comprises a transport roller (35) and a pressure roller (37).

12. Plate filter according to claim 11, characterised in that the transport rollers (35) are coated with, for example, plastic or rubber.

13. Plate filter according to claim 11 or 12, characterised in that the transport rollers (35) can in each case be driven by means of a chain (33), e.g. a roller chain.

14. Plate filter according to one of claims 4 to 13, characterised in that a lifting device is provided to move the filter band transport device (31) in synchronism with the plates (25) of the plate stack (23).

15. Plate filter according to one of claims 4 to 14, characterised in that each filter band transport device is arranged after the last deflection edge (13, 13').

16. Plate filter according to one of claims 4 to 15, characterised in that several groups of wind-up rollers (29) are provided, each group taking up a number of filter bands (11) after they have been used, yet each filter band (11) being individually wound up by a wind-up roller (29).

17. Plate filter according to claim 16, characterised in that several groups of adjacent wind-up rollers (29) are arranged above one another.

18. Plate filter according to one of claims 4 to 14, characterised in that a common wind-up roller (29') is provided which takes up all the filter bands (11) after they have been used.

19. Plate filter according to one of claims 4 to 18, characterised in that a cleaning device (41), e.g. a rotating brush, is provided at or after the respective deflection edge (13, 13') to clean the filter band (11).

20. Plate filter according to one of claims 10 to 19, characterised in that several plate stacks are arranged in tandem, with at least one deflection edge (13) being disposed in between.

21. Plate filter according to one of claims 16 to 20, in which at least one of the filter bands (11) is multilayered, e.g. comprises two layers (11a, 11b), characterised in that wind-up rollers (29) are provided for different layers.

22. Plate filter according to claim 21, in which several filter bands (11) are multilayered, characterised in that take-up rollers (29a) are provided to take up each two layers of different filter bands (11).

**Revendications**

1. Procédé pour la régulation automatique de la course d'une bande filtrante entre deux plaques de filtration voisines (25) d'un filtre à plaques comportant un dispositif de changement de direction, caractérisé en ce que la bande filtrante est tirée autour d'une arête fixe de déviation (13) du dispositif de changement de direction, de telle sorte que l'angle de changement de direction ($\alpha$) entre la direction (15) de la bande filtrante avant la déviation et la direction (17) de la bande filtrante après la déviation soit plus grand que l'angle ($\beta$) entre le plan (19) de la bande filtrante (11) avant la déviation et le plan (21) de la bande filtrante après la déviation.

2. Procédé selon la revendication 1, caractérisé en ce que l'angle ($\beta$) des plans de la bande est de 0°.

3. Procédé selon la revendication 1 ou 2, caractérisé en ce que l'angle ($\alpha$) de changement de direction s'élève à 90°.

4. Filtre à plaques, comportant une pile de plaques (23) qui comporte un certain nombre de plaques (25) séparables les unes des autres, une bande filtrante (11) mobile entre chaque paire de plaques voisines (25), un dispositif d'entraînement de bande filtrante (31) pour chaque bande filtrante (11) afin de remplacer périodiquement un segment de bande filtrante usé par un segment de bande filtrante frais, un dispositif de changement de direction pour la bande filtrante usée et un dispositif pour presser les unes contre les autres les plaques (25) de la pile de plaques (23) pendant la filtration et pour les séparer avant le transport des bandes filtrantes (11), caractérisé en ce que le dispositif de changement de direction pour chaque bande filtrante (11) comporte une arête fixe de déviation (13) qui est disposée de telle manière que l'angle de changement de direction ($\alpha$) entre la direction (15) de la bande filtrante avant la déviation et la direction (17) de la bande filtrante après la déviation soit plus grand que l'angle ($\beta$) entre le plan (19) de la bande filtrante (11) avant la déviation et le plan (21) de la bande filtrante après la déviation.

5. Filtre à plaques selon la revendication 4, caractérisé en ce que l'angle ($\alpha$) de changement de direction s'élève à 90° environ.

6. Filtre à plaques selon la revendication 4 ou 5, caractérisé en ce que l'angle ($\beta$) des plans de la bande est de 0°.

7. Filtre à plaques selon l'une quelconque des revendications 4 à 6, caractérisé en ce que les arêtes de déviation (13) pour les bandes filtrantes (11) sont disposées verticalement les unes au-dessus des autres.

8. Filtre à plaques selon l'une quelconque des revendications 4 à 7, caractérisé en ce que les arêtes de déviation (13) sont disposées de telle manière qu'alternativement, une bande filtrante (11) soit déviée vers la droite et qu'une autre bande filtrante (11) soit déviée vers la gauche.

9. Filtre à plaques selon l'une quelconque des revendications 4 à 8, caractérisé en ce que l'arête de déviation (13) présente un rayon relativement petit, par exemple de 4 à 10 mm.

10. Filtre à plaques selon l'une quelconque des revendications 4 à 9, caractérisé en ce qu'à la suite de ladite arête de déviation (13) d'une bande filtrante (13), il est prévu une seconde arête de déviation (13').

11. Filtre a plaques selon l'une quelconque des revendications 4 à 10, caractérise en ce que le dispositif d'entraînement de bande filtrante (31) comporte, pour chaque bande filtrante, un rouleau transporteur (35) et un rouleau de pression (37).

12. Filtre à plaques selon la revendication 11, caractérise en ce que les rouleaux transporteurs (35) sont revêtus, par exemple de matière plastique ou de caoutchouc.

13. Filtre à plaques selon la revendication 11 ou 12, caractérise en ce que les rouleaux transporteurs (35) peuvent être entraînés chacun au moyen d'une chaîne (33), par exemple une chaîne à rouleaux.

14. Filtre à plaques selon l'une quelconque des revendications 4 à 13, caractérisé en ce qu'il est prévu un dispositif élévateur pour déplacer le dispositif d'entraînement de bande filtrante (31) en synchronisme avec les plaques (25) de la pile de plaques (23).

15. Filtre à plaques selon l'une quelconque des revendications 4 à 14, caractérisé en ce que chaque dispositif d'entraînement de bande filtrante est disposé à la suite de la dernière arête de déviation (13, 13').

16. Filtre à plaques selon l'une quelconque des revendications 4 à 15, caractérisé en ce qu'il est prévu plusieurs groupes de rouleaux d'enroulement (29), chaque groupe prenant en charge un certain nombre de bandes filtrantes (11) après l'usage de celles-ci, mais chaque bande filtrante (11) étant enroulée individuellement par un rouleau d'enroulement (29).

17. Filtre à plaques selon la revendication 16, caractérisé en ce que plusieurs groupes de rouleaux d'enroulement (29) placés l'un à côté de l'autre sont disposés l'un au-dessus de l'autre.

18. Filtre à plaques selon l'une quelconque des revendications 4 à 14, caracterisé en ce qu'il est prévu un rouleau d'enroulement commun (29') qui prend en charge toutes les bandes filtrantes (11) après leur usage.

19. Filtre à plaques selon l'une quelconque des revendications 4 à 18, caractérisé en ce qu'il est prévu, au niveau ou à la suite de chaque arête de déviation (13, 13'), un dispositif de nettoyage (41), par exemple une brosse rotative, pour le nettoyage de la bande filtrante (11).

20. Filtre à plaques selon l'une quelconque des revendications 10 à 19, caractérisé en ce que plusieurs piles de plaques sont disposées l'une derrière l'autre, avec interposition d'au moins une arête de déviation (13).

21. Filtre à plaques selon l'une quelconque des revendications 16 à 20, dans lequel l'une au moins des bandes filtrantes (11) est en plusieurs épaisseurs, présentant par exemple deux épaisseurs (11a, 11b), caractérisé en ce que des rouleaux d'enroulement (29) sont prévus pour différentes épaisseurs.

22. Filtre à plaques selon la revendication 21, dans lequel plusieurs bandes filtrantes (11) sont en plusieurs épaisseurs, caractérisé en ce que des rouleaux d'enroulement (29a) sont prévus pour recevoir chacun deux épaisseurs de bandes filtrantes (11) différentes.

Fig.1

Fig.2

Fig.3

Fig.4

Fig.5

EP 0 304 597 B1

Fig.6

Fig.7

Fig. 8

Fig. 9

Fig. 12

29

37

35

13

23

11

Fig. 10

13  11

23

29

13'

37  35

Fig. 11

14